# DEMANDE DE BREVET EUROPEEN

(11) **EP 1 197 187 A2**
(43) Date de publication de la demande: **17.04.2002**
(21) Numéro de dépôt: 01480096.5
(22) Date de dépôt: 05.10.2001
(51) Int. Cl.: A61C 5/04, A61C 5/06

(54) **Procédé et dispositif d'obturation et d'étanchéité d'un canal dentaire**

(30) Priorité: 11.10.2000 FR 0013028
(71) Demandeur: Carrere, Francis, 06300 Nice (FR)
(72) Inventeur: Carrere, Francis, 06300 Nice (FR)
(74) Mandataire: Schuffenecker, Thierry

(57) **Abrégé**

Dispositif de distribution de matériau thermoplastique, par exemple de la Gutta-Percha, pour l'obturation d'un canal dentaire en endodontie. Le dispositif, en forme de seringue, contient de la Gutta-Percha chauffée à une température comprise entre 150 et 220 ° C par des moyens de chauffage (35). Au moment de l'enrobage du condenseur, le matériau est expulsé à travers un orifice (36) par pression sur le piston (31). La gamme de température retenue présente l'avantage d'améliorer considérablement la capacité de collage de la Gutta-Percha ainsi que la stérilité de cette dernière. Le dispositif de distribution peut être avantageusement associé avec des condenseurs Nickel-Titane (Ni-Ti) pour disposer la Gutta-Percha, fluide, en profondeur dans le canal dentaire.

## Description

### Domaine technique de l'invention

La présente invention concerne un dispositif et un procédé d'obturation et d'étanchéité d'un canal dentaire, utilisant un matériau thermoplastique tel que la Gutta-Percha.

### Etat de la technique antérieure

La technique la plus communément utilisée en endodontie pour réaliser l'obturation et l'étanchéité d'un canal dentaire fait appel à l'emploi d'un ciment de scellement associé à un cône de Gutta-Percha scellé. Dans cette technique très classique, le ciment est déposé dans le canal dentaire au moyen d'un instrument, à savoir un *lentulo* monté sur un contre-angle et entraîné en rotation par celui-ci. Un cône de Gutta-percha calibré est ajouté par la suite pour assurer le remplissage. Si cette technique est peu coûteuse, elle présente cependant l'inconvénient que le ciment de scellement se délite à la longue, créant ainsi un vide dans le canal et, par suite, un défaut d'étanchéité.

Il existe des techniques d'obturation plus sophistiquées qui permettent d'améliorer l'étanchéité et la densité de l'obturation à l'extrémité du canal, que les praticiens nomment apex, ou à la limite cémento-dentinaire. Ces techniques font toutes appel à l'emploi de la Gutta-Percha chaude, condensée.

Une première de ces techniques a été développée par J.W. Johnson, et est commercialisée sous la marque « THERMA-FIL ™ ». Selon cette première technique, le praticien détermine les dimensions du canal dentaire au moyen d'un cône de contrôle, appelé « *Verifier ».* Cete détermination lui permet ensuite de choisir un cône d'obturation en plastique pré-enrobé de Gutta-Percha. Le cône pré-enrobé de Gutta-Percha est ensuite disposé dans un réchauffeur, lequel fait monter la température de la Gutta-Percha aux environs de 120°C, avant d'être placé dans le canal dentaire. Si l'obturation et l'étanchéité ainsi réalisées sont bien plus satisfaisantes que dans la dite technique la plus communément utilisée, son coût de mise en oeuvre est considérablement plus élevé. Il faut en outre recourir à une radiographie de contrôle afin de déterminer avec précision la position du *Verifier* dans le canal dentaire préalablement à la mise en place du cône d'obturation. Cette première technique présente d'autres inconvénients. En premier lieu, il apparaît que dans certains canaux larges, le cône d'obturation peut dépasser l'apex. Au contraire, dans les canaux fins et courbes, la Gutta-Percha ne condense pas toujours, ce qui entraîne un défaut d'étanchéité puisque seul le cône en plastique participe à l'obturation. Ensuite, on a relevé que pour certains canaux qui sont larges dans le tiers coronaire, il est nécessaire de disposer deux cônes de plastique. Enfin, le dernier inconvénient résulte du fait qu'il est nécessaire, de toute manière, une fois l'obturation réalisée, de tailler la partie supérieure du cône en plastique, en général au moyen d'une fraise spécifique - telle que fraise THERMACUT™ - afin de ne pas gêner l'obturation des autres canaux. Cette opération supplémentaire entraîne, bien évidemment des risques septiques pour les canaux non encore obturés.

Une seconde de ces techniques faisant également appel à l'emploi de Gutta-Percha chaude, condensée, est connue des praticiens sous la dénomination « condensation centrée en une vague continue ». Elle est commercialisée sous la marque *« SYSTEME B* ™ ». Cette technique a été conçue par L.S. BUCHANAN et est décrite dans la revue ENDODONTIE, vol. 17, n° 4, décembre 1998. Cette technique repose sur le compactage vertical de la Gutta-Percha afin de réaliser l'obturation tridimensionnelle du système canalaire en une vague de réchauffement et condensation. Plus précisément, il faut une préparation adéquate de manière à ajuster un cône de Gutta-Percha au canal dentaire. Le cône de Gutta-Percha est calibré par rapport à la lime qui a préparé le canal et est ajusté à froid. Puis il est scellé à la longueur canalaire de la dent. Il est ensuite chauffé directement dans le canal, à l'aide d'un instrument spécifique qui est un fouloir électrique chauffant. Cet instrument permet de monter à une température de 200° C. L'inconvénient réside dans le fait que la partie inférieure de la Gutta-Percha, qui n'est pas en contact direct avec le fouloir chauffant, reste à une température bien inférieure à celle du fouloir, ce qui est préjudiciable à la fusion et au collage de la Gutta-Percha. En outre, de par sa constitution et de la présence d'un élément chauffant dans sa structure, le fouloir présente une section importante, ce qui rend plus difficile l'accès au fond du canal dentaire, notamment lorsque ce dernier présente une courbure.

Une troisième de ces techniques utilisant également de la Gutta-Percha chaude, condensée, est connue des praticiens sous la marque « MICROSEAL ™ », développée par J.T. Mc SPADDEN. Dans cette troisième technique, on ajuste préalablement un premier cône de Gutta-Percha - dit maître cône - à la longueur de travail dans le canal dentaire. Ce maître cône est ensuite scellé dans le canal au moyen d'un ciment de scellement. Il est compacté à froid au moyen d'un fouloir rotatif, lequel vient comprimer le cône latéralement créant ainsi un vide dans ce dernier. Dans ce vide, on introduit alors un condenseur en nickel-titane qui est enrobé de Gutta-Percha chauffée à 120°C. La rotation du condenseur créé un dégagement de chaleur, lequel vient mettre en fusion le maître-cône préexistant. Le scellement ainsi réalisé n'est pas toujours satisfaisant et on observe, en outre, que dans certaines circonstances, le maître-cône se descelle, ce qui contraint le praticien à recommencer l'opération. En outre, le praticien doit exercer une certaine pression dans les canaux étroits, ce qui accroît le risque de bris du condenseur.

Comme on le voit, les trois techniques d'obturation et d'étanchéité qui viennent d'être brièvement exposées, si elles améliorent considérablement l'obturation et l'étanchéité permise par la technique la plus communément utilisée, n'en demeurent pas moins onéreuses à mettre en oeuvre. En outre, du fait que les trois techniques ont recours à des cônes de Gutta-Percha ayant des conicités iso 0,4. ; 0,6 et 0,8 , elles obligent le praticien à procéder à un élargissement du tiers coronaire du canal non seulement pour permettre le passage des cônes, mais aussi celui des divers instruments. Il est évident que l'élargissement du canal dentaire fragilise considérablement la racine de la dent, la mettant de ce fait en danger.

Le problème technique à résoudre par la présente invention est l'élimination des inconvénients et la simplification des méthodes et instruments connus, utilisés pour l'obturation tridimensionnelle d'un canal dentaire au moyen d'un matériau thermoplastique tel que la Gutta-Percha, tout en assurant un degré de stérilité optimal, un accès direct au fond du canal dentaire sans fragilisation excessive de la racine, et un coût de mise en oeuvre faible.

### Résumé de l'invention

La présente invention concerne une instrumentation adaptée à l'obturation et l'étanchéité stériles d'un canal dentaire, permettant directement l'utilisation d'un matériau thermoplastique tel que la Gutta-Percha.

Plus précisément, l'invention a pour objet un dispositif distributeur de matériau thermoplastique utilisé en endodontie pour obturer un canal dentaire comprenant des moyens destinés à contenir le dudit matériau thermoplastique ; des moyens de chauffage dudit matériau thermoplastique pour en faire monter la température entre 150 et 220°C et des moyens destinés à recevoir au moins partiellement un instrument de compactage, tel qu'un condenseur par exemple, de façon à créer un enrobage de celui-ci par le matériau thermoplastique préalablement à son introduction dans le canal dentaire.

L'instrumentation selon l'invention comporte un dispositif de distribution de matériau thermoplastique, par exemple de la Gutta-Percha, à des températures comprises entre 150 à 220 ° C, ce qui permet d'assurer, d'une part, la stérilité de la Gutta-Percha ainsi que, d'autre part, de faire varier la fluidité et la viscosité de cette Gutta-Percha afin de permettre l'obturation de canaux de géométries différentes. Le dispositif distributeur comporte un orifice destiné à recevoir l'extrémité d'un instrument fin tel qu'un condenseur de manière à permettre directement son enrobage avec de la Gutta-Percha, dans des conditions optimales de fusion et surtout de stérilité. La gamme de température retenue présente en outre l'avantage d'améliorer considérablement la capacité de collage de la Gutta-Percha.

Les condenseurs Nickel-Titane (Ni-Ti) qui sont sur le marché sont ainsi directement utilisables et permettent de disposer la Gutta-Percha, fluide, en profondeur jusqu'à l'apex. La grande flexibilité de ces condenseurs permet une mise en place facile de la Gutta-Percha même dans les canaux courbes, ce que ne permettait pas l'usage d'un cône en plastique dans la méthode THERMOFIL ™ ou l'instrument fouloir dans la méthode SYSTEME B.

Dans un premier mode de réalisation, le dispositif de distribution comporte une première partie destinée à transmettre à la Gutta-Percha la chaleur reçue de la part d'un réchauffeur extérieur. Il comporte une seconde partie, isolée thermiquement de la première, destinée à une prise en main sans danger du dispositif. Le dispositif peut se présenter sous une forme portable, telle qu'une seringue par exemple, laquelle comporte un piston manoeuvré au moyen d'une tige actionnée par le praticien, afin de faciliter l'expulsion de la Gutta-Percha à l'autre extrémité, dans laquelle vient plonger le condenseur.

De préférence, cette seringue peut être jetable, et peut être associée à un réchauffeur spécifique, séparé, lequel comporte des moyens de régulation de température permettant au praticien de choisir la température souhaitée entre 150°C et 220°C. Ainsi celui-ci peut il définir le degré de viscosité souhaité en fonction de la géométrie du canal à obturer.

Dans un second mode de réalisation, le dispositif comporte un réchauffeur intégré, lequel présente une résistance chauffante connectée à une alimentation électrique extérieure, elle-même régulable en température.

Ces deux modes de réalisation permettent d'éviter les inconvénients présentée par la méthode B de l'art antérieur puisque l'on peut utiliser les condenseurs existants, de section très faible qui permettent un accès en profondeur au canal dentaire.

L'invention concerne également un procédé de conditionnement d'un matériau endodontique tel que la Gutta-Percha, préalablement à sa mise en place dans un canal dentaire préparé à l'obturation tri-dimensionnelle, caractérisé en ce qu'il comporte les étapes suivantes :
- préchauffage du matériau thermoplastique dans une gamme de température comprise entre 150 et 220 ° C ;
- enrobage d'un instrument de compactage avec ledit matériau chauffé dans ladite gamme de température.

### Description des figures.

La figure 1 est une vue en coupe longitudinale d'un dispositif portable distributeur d'un matériau thermoplastique, tel que de la Gutta-Percha.

La figure 2 représente le distributeur de la figure 1 engagé dans un système de chauffage extérieur.

La figure 3 est une vue en coupe longitudinale d'un dispositif distributeur portable comportant un système de chauffage intégré.

La figure 4 représente un condenseur particulièrement adaptée à l'obturation et l'étanchéité d'un canal dentaire.

### Description des modes de réalisation préférés de l'invention.

L'instrumentation qui va être décrite ci-après permet la mise en place aisée dans un canal dentaire d'un matériau thermoplastique tel que la Gutta-Percha en phase alpha.

Les modes de réalisation préférés qui seront particulièrement décrits concernent des dispositifs portables, lesquels permettent une distribution aisée de Gutta-Percha directement sur le lieu d'intervention du praticien.

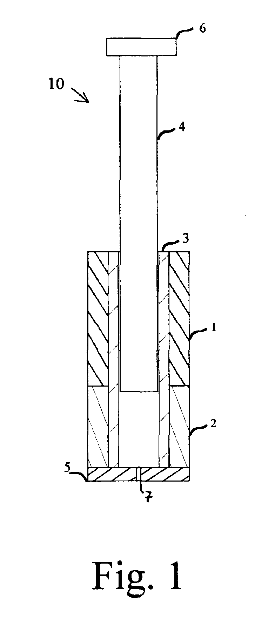

La figure 1 montre un premier mode de réalisation portable se présentant sous la forme d'une seringue 10 comportant un canon 3 dans lequel vient coulisser un piston 4 comportant une extrémité 6 manoeuvrable par le praticien. Le canon 3 de la seringue est disposé dans un cylindre comportant une partie inférieure 2 en matériau conducteur de la chaleur, par exemple un matériau métallique et une partie supérieure 1 en matériau thermiquement isolant de manière à éviter tout danger de brûlure pour le praticien. L'extrémité de la seringue est obturée par une paquette 5 munie d'un orifice 7 destiné à recevoir un instrument de compactage, tel qu'un condenseur (non décrit sur la figure 1).

Le piston 4 peut être poussé par le praticien vers l'intérieur du fourreau lorsque celui-ci désire en expulser du produit thermoplastique par l'orifice 7. La sortie en pression du matériau thermoplastique par l'orifice 7 assure l'enrobage adéquat d'un condenseur inséré à l'intérieur de la seringue au travers dudit orifice 7.

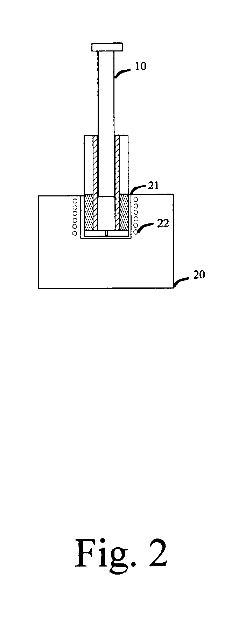

La seringue qui vient d'être décrite est destinée à coopérer avec un dispositif chauffant 20 séparé, représenté sur la figure 2. Le dispositif chauffant comporte une cuve 21, et un moyen de chauffage, par exemple une résistance électrique 22, une alimentation électrique et des moyens de réglage de la température permettant de faire varier cette dernière entre 150 et 220° C.

Un dispositif de régulation (non représenté) permet de maintenir la température de fonctionnement à la valeur choisie par le praticien pour obtenir à la fois la stérilité de la Gutta-Percha et la viscosité souhaitée. La cuve est conçue pour recevoir la partie inférieure 2 de la seringue contenant de la Gutta-Percha à porter et à maintenir à la température choisie. La partie inférieure 2 est en matériau bon conducteur de la chaleur.

Il est clair que le schéma de la figure 1 ne représente qu'un exemple de réalisation. De nombreuses variantes sont possibles. Ainsi, l'élément 2 pourra être supprimé dans un mode de réalisation particulier, de sorte que la partie inférieure du canon 3 assurera le transfert thermique entre la cuve 21 et le contenu de la seringue 10. La partie inférieure 2 du cylindre est cependant intéressante en ce sens qu'elle accroît l'inertie thermique de la seringue et permet de ce fait de maintenir plus facilement la Gutta-Percha à la température souhaitée.

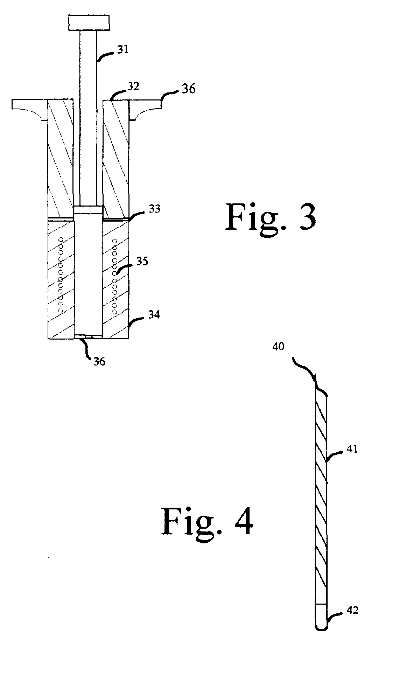

Dans un autre mode de réalisation, on pourra préférer privilégier une structure plus simple, sans le canon 3, telle que celle illustrée dans la figure 3 qui sera décrite plus loin.

On observera que la simplicité de la seringue qui vient d'être décrite permet d'envisager l'association de cette seringue avec un stérilisateur à billes, afin de monter la température de la partie inférieure de la seringue à la valeur souhaitée dans la gamme de températures indiquée précédemment.

On pourra cependant privilégier une structure autonome comportant un dispositif de chauffage intégré.

Une telle structure est illustrée dans la figure 3. Cette structure comporte une partie supérieure 32 fixée par des moyens de fixation (non représentés) à une partie inférieure 34. La partie supérieure 32 et inférieure 34 sont choisies de manière à présenter des caractéristiques thermiques bien distinctes. La partie supérieure est constituée en élément thermiquement isolant, comme un plastique ou un céramique, tandis que la partie inférieure 34 peut être réalisée en matériau métallique. Un joint, par exemple en silicone 33, assure l'isolation thermique entre les deux éléments. Un piston réalisé en matériau isolant, et résistant à la température de fonctionnement de la seringue, facilite l'expulsion de la matière lorsque le condenseur est plongé dans la seringue par l'orifice 36.

D'une manière générale, la seringue est destinée à coopérer avec un condenseur de type Nickel-Titane (Ni-Ti), qui ressort alors directement enrobé de Gutta-Percha fluide, et parfaitement stérile.

Le volume de la partie de la seringue contenant le matériau thermoplastique est choisi de manière à assurer entre 5 et 15 obturations canalaires.

On notera que les seringues ne comportant pas de dispositif de chauffage intégré pourront être associées à des réchauffeurs à billes classiques, lesquelles billes permettront de retenir la partie inférieure 22 de la seringue assurant ainsi le chauffage de cette dernière.

Comme on le voit l'invention est parfaitement adaptée à l'usage des condenseurs existants, lesquels présentent un filetage allant jusqu'à leur extrémité distale. Ainsi, l'invention peut être directement utilisée avec le matériel existant chez les praticiens. Cependant, il apparaît que l'effet de compactage de la Gutta-Percha peut être substantiellement amélioré par l'emploi d'un condenseur spécifique dans lequel le filetage s'arrête avant ladite extrémité distale de façon à faciliter le compactage vertical de la Gutta-Percha.

Un tel condenseur est représenté dans la figure 4 qui montre un condenseur 40 comportant un filetage 41 et une partie terminale 42 laquelle ne comporte pas de filetage sur une longueur de 1 mm à partir de son extrémité distale, laquelle est de surcroît arrondie de manière à assurer le compactage vertical.. La partie non filetée est de section identique à celle de la partie filetée qui est de diamètre bien connue.

On notera que tous les dispositifs qui viennent d'être décrits permettent de tirer avantage des propriétés de collage et de stérilité de la Gutta-Percha qui apparaissent à partir de 150° C.

## Revendications

1. Dispositif distributeur de matériau thermoplastique utilisé en endodontie pour obturer un canal dentaire comprenant :
- des moyens (3, 32, 34) destinés à contenir le dudit matériau thermoplastique ;
- des moyens de chauffage (22, 35) dudit matériau thermoplastique pour en faire monter la température entre 150 et 220°C ; et
- des moyens (7) destinés à recevoir au moins partiellement un instrument de compactage, tel qu'un condenseur par exemple, de façon à créer un enrobage de celui-ci par le matériau thermoplastique préalablement à son introduction dans le canal dentaire.

2. Dispositif selon la revendication 1 **caractérisé en ce que** les moyens chauffants (22, 35) sont réalisés sous forme de chauffage électrique et d'un élément régulateur de température destiné à maintenir la température dans ladite gamme et les moyens destinés à contenir le matériau thermoplastique sont réalisés sous forme d'un élément portable permettant une tenue sans danger de l'élément par l'utilisateur.

3. Dispositif selon la revendication 2 **caractérisé en ce que** l'élément portable comporte des moyens présentant une inertie thermique pour permettre le chauffage et le maintien en température dudit matériau dans la dite gamme de température.

4. Dispositif selon la revendication 3 **caractérisé en ce que** l'élément portable comporte une partie inférieure (2) en matériau conducteur de la chaleur qui est destinée à coopérer avec une unité de chauffage extérieure (20) et une partie supérieure (1) comportant un élément isolant thermiquement.

5. Dispositif selon la revendication 2 **caractérisé en ce que** l'élément portable est doté de moyens (35) électriques de chauffage connectés à une alimentation électrique extérieure, et comportant un orifice destiné à recevoir au moins partiellement un instrument de compactage.

6. Dispositif selon l'une quelconque des revendications 2 à 5 **caractérisé en ce que** l'élément portable se présente sous la forme d'une seringue dont le piston (31) permet l'expulsion de matériau thermoplastique tel que la Gutta-Percha lors de l'introduction de l'instrument de compactage.

7. Dispositif portable selon l'une quelconque des revendications 2 à 5 **caractérisé en ce qu'**il se présente sous la forme d'une seringue jetable, comportant une quantité prédéfinie de Gutta-Percha correspondant à environ 5 à 15 obturations canalaires.

8. Instrument filiforme pour le compactage de matériau thermoplastique utilisé en endodontie, **caractérisé en ce qu'**il comporte
- une partie supérieure filetée
- une partie inférieure non filetée de longueur inférieure à la partie filetée et dont l'extrémité distale est arrondie.

9. Procédé de préparation d'un matériau thermoplastique utilisé en endondontie **caractérisé en ce qu'**il comporte les étapes suivantes :
- préchauffage du matériau thermoplastique dans une gamme de température comprise entre 150 et 220° C.
- enrobage d'un instrument de compactage avec ledit matériau chauffé dans ladite gamme de température.
